# EUROPÄISCHE PATENTANMELDUNG

(11) **EP 4 155 034 A1**
(43) Veröffentlichungstag der Anmeldung: **29.03.2023**
(21) Anmeldenummer: 22195756.6
(22) Anmeldetag: 15.09.2022
(51) Int. Cl.: B25J 9/00, B64U 70/20, B64U 70/92, B64U 80/80, B64U 80/25, B64D 39/00

(54) **AUSGLEICHSMECHANISMUS UND DAMIT AUSGERÜSTETES TRÄGER-FLUGOBJEKT**

(30) Priorität: 22.09.2021 DE 102021124587
(71) Anmelder: Schuhmacher, Leo, 21073 Hamburg (DE)
(72) Erfinder: Schuhmacher, Leo, 21073 Hamburg (DE)
(74) Vertreter: Grünecker Patent- und Rechtsanwälte PartG mbB

(57) **Zusammenfassung**

Die vorliegende Erfindung betrifft einen Ausgleichsmechanismus (1) und ein damit ausgerüstetes Träger-Flugobjekt (2). Ein solcher Ausgleichsmechanismus (1) dient dem Zwecke, eine positionelle Inkongruenz zwischen dem Träger-Flugobjekt (2), insbesondere einer Drohne, im Flugzustand und einem weiteren Flugobjekt oder einer Bodenstation auszugleichen. Zur Erfüllung dieses Zweckes umfasst dieser Ausgleichsmechanismus (1):
- mindestens zwei kinematische Ketten (3, 4, 5), wobei jede kinematische Kette aus mindestens einem Glied (3a, 3b, 4a, 4b, 5a, 5b) besteht;
- einen Endeffektor (6), mit dem alle kinematischen Ketten (3, 4, 5) mit jeweils einem ersten ihrer Enden verbunden sind;
- erste Gelenke (7, 8, 9), die jeweils an einem zweiten Ende der kinematischen Ketten (3, 4, 5) angeordnet sind, um eine gelenkige Verbindung zwischen der jeweiligen kinematischen Kette (3, 4, 5) und dem Träger-Flugobjekt (2) herzustellen;
- zweite Gelenke (10, 11, 12), die jeweils an dem ersten Ende der kinematischen Ketten (3, 4, 5) angeordnet sind, um eine gelenkige Verbindung zwischen der jeweiligen kinematischen Kette und dem Endeffektor (6) herzustellen; und
- mindestens einen ersten Aktuator, der an einem ersten und/oder zweiten Gelenk (7, 8, 9, 10, 11, 12) vorgesehen ist, um eine translatorische und/oder rotatorische Bewegung der jeweiligen kinematischen Kette (3, 4, 5) am und/oder um das jeweilige erste und/oder zweite Gelenk (7, 8, 9, 10, 11, 12) zu erzeugen.

## Beschreibung

Die Erfindung betrifft einen Ausgleichsmechanismus zum Ausgleichen einer positionellen Inkongruenz zwischen einem Träger-Flugobjekt, insbesondere einer Drohne, im Flugzustand und einem weiteren Flugobjekt oder einer Bodenstation. Des Weiteren betrifft die Erfindung ein Träger-Flugobjekt, insbesondere eine Drohne, die mit einem solchen Ausgleichsmechanismus ausgerüstet ist.

Drohnen sind schon längst viel mehr als ein Spielzeug für Hobbypiloten. In der Hand professioneller Anwender sind sie ein starkes Werkzeug im Dienste von Mensch, Umwelt und Gesellschaft. Demzufolge ist es wenig überraschend, dass immer mehr innovative Drohnenservices entstehen und die Nachfrage danach stetig wächst - die sog. "Drone-Economy" ist ein boomender Markt mit rosigen Zukunftsaussichten. So wird erwartet, dass Drohnen, auch als unbemannte Luftfahrzeuge (unmanned aero vehicles, UAVs) und ferngesteuerte Flugzeuge (remotely piloted aircrafts, RPAs) bezeichnet, bald für den Einsatz durch private und geschäftliche Einheiten zugelassen sind, vorbehaltlich anhängiger Vorschriften, die von verschiedenen Luftfahrtbehörden eingeführt werden, wie z.B. dem Luftfahrt-Bundesamt (LBA).

Vorgeschlagene Verwendungen für Drohnen umfassen unter anderem die Durchsetzung von städtischen Verordnungen, andere Regierungsfunktionen, Paketzustellung und Bilderfassung. Daher ist vorstellbar, dass Benutzer schon in naher Zukunft Drohnen kaufen können, um bestimmte Bedürfnisse oder Aufgaben des täglichen Lebens zu erfüllen, wie zum Beispiel die Lieferung einer Nutzlast von einem Lager an einen Kunden und ggf. von dem Kunden zurück in das Lager.

Hochproblematisch und bisher nicht in einer zufriedenstellenden Art und Weise gelöst ist jedoch, dass bei der Erfüllung von Übergabeaufgaben, bspw. zwecks Austausch eines festen Körpers (wie eines Paketes) oder einer Flüssigkeit, zwischen zwei Flugobjekten im Flugzustand, oder zwischen einem Flugobjekt im Flugzustand und einem weiteren Flugobjekt im Bodenzustand, oder zwischen einem Flugobjekt im Flugzustand und einer (ortsfesten oder bewegten, bspw. fahrzeuggebundenen) Bodenstation, unbedingt eine bestimmte positionelle Kongruenz zwischen dem Flugobjekt im Flugzustand und dem weiteren Flugobjekt oder der Bodenstation einzuhalten ist. "Positionelle Kongruenz" bedeutet hier, dass die beiden Flugobjekte bzw. das Flugobjekt und die Bodenstation so relativ zueinander positioniert und anschließend in dieser Relativposition gehalten werden müssen, dass eine sichere Übergabe des auszutauschenden Produktes unter Zuhilfenahme entsprechender Austauschmechanismen (Führungen, Förderer, Greifer, Rohre, Schläuche etc.) möglich ist.

In diesen vorerläuterten kritischen Übergabesituationen treten aber selbstverständlich immer externe Störeinflüsse auf, insbesondere in Form der Komponenten des Windes, denen das Empfänger- und Übergeber-Flugobjekt ausgesetzt ist, während es über oder unter dem weiteren Übergeber- oder Empfänger-Flugobjekt fliegt. Der Wind ist dabei die Überlagerung von zeitlich variierendem vorherrschendem Wind, Turbulenzen und dem vom weiteren Übergeber- oder Empfänger-Flugobjekt verursachten Wind. Diese Komponenten des Windes sind das Ergebnis stochastischer Prozesse, die kaum vorhersehbar und nur schwer abschätzbar sind. Diese machen die Steuerung der Position des Empfänger- oder Übergeber-Flugobjektes relativ zum Übergeber- oder Empfänger-Flugobjekt zu einem ausgesprochen schweren Unterfangen. Dieselben Probleme treten auch beim Produktaustausch zwischen einem Empfänger- oder Übergeber-Flugobjekt und einer Übergeber- oder Empfänger-Bodenstation auf. Hier können Turbulenzen infolge variierender Bodeneffekte das Herstellen der positionellen Kongruenz zwischen Flugobjekt und Bodenstation und somit die Durchführung des Produktaustausches zusätzlich erschweren.

Weiter verschärft werden die vorgeschilderten Probleme dadurch, dass das weitere Flugobjekt oder die Bodenstation sich keineswegs nur in einem ortsfesten Schwebe- oder Bodenzustand befinden kann, sondern durchaus zum Zeitpunkt des geplanten Produktaustausches geradeaus oder eine Kurve fliegen oder fahren kann. In diesem Fall kann aber die zukünftige Position des weiteren Flugobjektes oder der Bodenstation nicht mit absoluter Präzision prognostiziert werden, wodurch die Herstellung der für den Produktaustausch geforderten positionellen Kongruenz zwischen den Flugobjekten oder zwischen dem Flugobjekt und der Bodenstation sogar noch weiter erschwert wird.

Die vorliegende Erfindung hat es sich daher zur Aufgabe gestellt, zum Koppeln zweier Flugobjekte, insbesondere zweier Drohnen, oder zum Koppeln eines Flugobjektes, insbesondere einer Drohne, und einer Bodenstation einen Ausgleichsmechanismus bereitzustellen, welcher in der Lage ist, die durch die vorgeschilderten Störfaktoren verursachten positionellen Inkongruenzen auszugleichen, um z.B. feste Produkte (wie Pakete o.ä.) oder flüssige Produkte (wie Wasser, Pflanzenschutzmittel o.ä.) zuverlässig und schnell austauschen zu können. Ferner ist es die Aufgabe der vorliegenden Erfindung, ein Träger-Flugobjekt, insbesondere eine Drohne, bereitzustellen, welches die rasche Eliminierung positioneller Inkongruenzen in Bezug auf ein weiteres Flugobjekt oder eine Bodenstation ermöglicht, um anschließend z.B. einen Produktaustausch zuverlässig durchführen zu können.

Gelöst wird diese Aufgabe im Hinblick auf den Ausgleichsmechanismus durch den im Anspruch 1 definierten Ausgleichsmechanismus und im Hinblick auf das Träger-Flugobjekt durch das im Anspruch 16 definierte Träger-Flugobjekt.

Im Einzelnen ist erfindungsgemäß vorgesehen, dass ein Ausgleichsmechanismus zum Ausgleichen einer positionellen Inkongruenz zwischen einem Träger-Flugobjekt, insbesondere einer Drohne, im Flugzustand und einem weiteren Flugobjekt oder einer Bodenstation Folgendes umfasst:
- mindestens zwei kinematische Ketten, wobei jede kinematische Kette aus mindestens einem Glied besteht;
- einen Endeffektor, mit dem alle kinematischen Ketten mit jeweils einem ersten ihrer Enden verbunden sind;
- erste Gelenke, die jeweils an einem zweiten Ende der kinematischen Ketten angeordnet sind, um eine gelenkige Verbindung zwischen der jeweiligen kinematischen Kette und dem Träger-Flugobjekt herzustellen;
- zweite Gelenke, die jeweils an dem ersten Ende der kinematischen Ketten angeordnet sind, um eine gelenkige Verbindung zwischen der jeweiligen kinematischen Kette und dem Endeffektor herzustellen; und
- mindestens einen ersten Aktuator, der an einem ersten und/oder zweiten Gelenk vorgesehen ist, um eine translatorische und/oder rotatorische Bewegung der jeweiligen kinematischen Kette am und/oder um das jeweilige erste und/oder zweite Gelenk zu erzeugen.

Die oben genannte erfindungsgemäße Lösung kann bei jeglichem Flugobjekt-Typ (bemannt oder unbemannt) vorteilhaft zum Einsatz gelangen. Neben den exemplarisch genannten Drohnen wären hier im Allgemeinen zivile oder militärische Flugzeuge und im Speziellen Multicopter, senkrecht startende und landende Flugzeuge (VTOL-Flugzeuge) oder Ornithopter zu nennen.

Der erfindungsgemäße Ausgleichsmechanismus basiert auf einer Kinematik, bei der der Endeffektor, welcher dem Eingriff mit dem zu koppelnden weiteren Flugobjekt oder Bodenstation dient, von mindestens zwei kinematischen Ketten geführt wird, die über erste Gelenke verschiebbar und/oder drehbar im Träger-Flugobjekt gelagert sind. Jede kinematische Kette besteht wiederum aus mindestens einem Glied. Dadurch, dass die dem Träger-Flugobjekt abgewandten Enden aller kinematischen Ketten gemeinsam am Endeffektor angreifen, wird eine in sich geschlossene kinematische Anordnung geschaffen, die gegenüber einarmigen Kopplungssystemen eine viel höhere Wiederholgenauigkeit und Steifigkeit der Konstruktion ermöglicht. Die Nutzung mehrerer (drei, vier, fünf oder sechs oder mehr) kinematischen Ketten in einem Ausgleichsmechanismus ermöglicht in der Regel eine Erhöhung der Dynamik des jeweiligen Ausgleichsmechanismus.

Gemäß einer bevorzugten Ausführungsvariante der Erfindung sind drei identische kinematische Ketten zur Verbindung zwischen Träger-Flugobjekt und Endeffektor vorgesehen, wobei zwei benachbarte kinematische Ketten jeweils deltaförmig vom Träger-Flugobjekt zum Endeffektor zusammenlaufen.

Die Delta-Form mit drei kinematischen Ketten stellt ein effizientes Mittel dar, um einen Ausgleich der Relativbewegungen zwischen Träger-Flugobjekt und weiterem Flugobjekt oder Bodenstation im dreidimensionalen Raum zu schaffen.

Bei einer weiteren bevorzugten Ausführungsvariante der Erfindung ist vorgesehen, dass jede kinematische Kette aus mindestens zwei Gliedern zusammengesetzt ist, wobei die Glieder einer kinematischen Kette durch mindestens ein drittes Gelenk miteinander verbunden sind.

Außerdem sieht eine bevorzugte Ausführungsform der Erfindung vor, dass die Glieder jeweils als Stab oder als Seil ausgebildet sind.

Ein Stab oder ein unter Spannung stehendes Seil ist steif genug, um den Ausgleichsmechanismus starr zu halten, während sich der Endeffektor zum Ausgleichen der positionellen Inkongruenz im Raum bewegt. Bei der Verwendung von Seilgliedern wirken Seile und Seilwinden als Aktuatoren, um den Endeffektor (und das daran befestigte weitere Flugobjekt) auf die gewünschte Übergabeposition zu ziehen, fallenzulassen oder zu halten und damit einen störungsfreien Produktaustausch zu ermöglichen.

Eine besonders zweckmäßige Weiterbildung der Erfindung besteht darin, dass der Ausgleichsmechanismus weiter mindestens einen zweiten Aktuator umfasst, der an einem dritten Gelenk vorgesehen ist, um eine translatorische und/oder rotatorische Bewegung der jeweiligen kinematischen Kette am und/oder um das jeweilige dritte Gelenk zu erzeugen.

Um sowohl das passive Halten einer Relativposition als auch das Durchführen aktiver Ausgleichsbewegungen zu verbessern, können zusätzliche Aktuatoren in den Gelenken der kinematischen Ketten implementiert werden. Die Aktuatoren erzeugen Drehmomente zwischen den Gliedern der kinematischen Ketten. Hierbei kann jeder Aktuator entweder eine feste Gelenkposition halten (fester Sollwert) oder einen durch den Bewegungsregler vorgegebenen variablen Sollwert anfahren.

Vorzugsweise kann es sich bei dem mindestens einen ersten Aktuator und/oder mindestens einen zweiten Aktuator um einen mechanisch, elektrisch und/oder pneumatisch betätigbaren Aktuator handeln.

Als Aktuatoren können sowohl Dreh- als auch Linearantriebe verwendet werden. Dabei kann die Antriebseinrichtung einen Servomotor (mit Getriebe und Antriebsregler) umfassen. Servomotoren sind besonders vorteilhaft für dynamische Verfahrwege und für flexible Positionieraufgaben.

Eine weitere zweckmäßige Ausgestaltung der Erfindung sieht vor, dass die ersten Gelenke und/oder die zweiten Gelenke und/oder die dritten Gelenke jeweils null bis drei translatorische Freiheitsgrade und/oder null bis drei rotatorische Freiheitsgrade, aber jeweils mindestens einen Freiheitsgrad besitzen.

Die erfindungsgemäßen Gelenkverbindungen zwischen den mindestens zwei kinematischen Ketten und der flugobjektseitigen Trägerplattform liefern je nach Konfiguration Freiheitsgrade am Endeffektor und ermöglichen damit dessen Bewegung.

Dadurch, dass das Gelenk null bis drei rotatorische und/oder null bis drei translatorische Freiheitsgrade, aber mindestens einen Freiheitsgrad, aufweist, sind bis zu vierzehn kinematische Gelenkvarianten möglich. Nicht einschränkende Beispiele für industrielle Gelenke, die erfindungsgemäß zum Einsatz gelangen könnten, sind: Lagergelenke, kartesische Gelenke, zylindrische Gelenke, Kardangelenke, Spindelgelenke, Stift-Schlitz-Gelenke, ebene Gelenke, prismatische Gelenke, rechteckige Gelenke, Drehgelenke, Kugelgelenke, Teleskop-Gelenke, Kreuzgelenke.

Im einfachsten Fall ist das zu bewegende Glied des Ausgleichsmechanismus unmittelbar durch ein Schubgelenk oder ein Drehgelenk mit jeweils genau einem Freiheitsgrad angebunden. Das Schubgelenk lässt nur eine Schiebung zu, z. B. zur Realisierung eines teleskopartig ein- und ausfahrbaren Gliedes. Das Drehgelenk erlaubt scharnierartig nur eine Rotation. Jedoch können auch Gelenke mit mehr als einem Freiheitsgrad, wie ein Drehschubgelenk (Freiheitsgrad f = 2), ein Kugelgelenk (Freiheitsgrad f = 3) oder ein Kurvengelenk (Freiheitsgrad f = 2) Verwendung finden. Hochleistungssteuerungen verarbeiten die Vielzahl an Freiheitsgraden und wandeln die Gelenkkoordinaten des Ausgleichsmechanismus in Weltkoordinaten um, die für die komplexen translatorischen und/oder rotatorischen Ausgleichsbewegungen erforderlich sind. Insbesondere können die ersten und/oder zweiten und/oder dritten Gelenke als in zwei rotatorischen Freiheitsgraden bewegliche Kreuzgelenke - auch Universalgelenke (Universal Joints) genannt - ausgebildet sein. Die Glieder der kinematischen Ketten können bspw. auch durch Drehschubgelenke (zylindrische Gelenke), die einen translatorischen und einen rotatorischen Freiheitsgrad besitzen, miteinander oder mit dem Träger-Flugobjekt bzw. mit dem Endeffektor verbunden sein.

Dabei stellt es eine besonders vorteilhafte Ausgestaltung der Erfindung dar, wenn die Bewegung mindestens eines der ersten Gelenke und/oder der zweiten Gelenke und/oder der dritten Gelenke mechanisch blockierbar ist, insbesondere durch Versehen des Gelenkes mit einem Verriegelungsmechanismus und/oder einer Bremse.

Mittels dieser Ausgestaltung kann nach Erreichen der gewünschten Relativposition zwischen Träger-Flugobjekt und weiterem Flugobjekt bzw. Basisstation sicher unterbunden werden, dass Relativverschiebungen und/oder -verdrehungen auftreten, welche die Sicherheit der Produktübergabe beeinträchtigen könnten.

Es ist ferner bevorzugt, dass mindestens eines der zweiten und/oder dritten Gelenke als Teleskop-Gelenk ausgebildet ist und wahlweise mit einem Aktuator zum Aus- oder Einfahren eines Glieds der jeweiligen kinematischen Kette versehen ist.

Um eine größere Reichweite des Ausgleichsmechanismus zu erreichen, können Teleskop-Gelenke (Linearachsen) in die kinematischen Ketten verbaut werden, die jeweils einen zusätzlichen translatorischen Freiheitsgrad bereitstellen. Auf diese Weise wird der Einsatzbereich des Ausgleichsmechanismus erweitert. Durch Ein- und Ausfahren der entsprechenden Glieder lässt sich der Abstand von der flugobjektseitigen Trägerplattform zum Endeffektor variieren.

In besonders bevorzugter Weise kann zudem vorgesehen sein, dass der Endeffektor aus einer kardanischen Aufhängung besteht.

Bei der kardanischen Aufhängung (auch Gimbal genannt) ist ein Koppelelement (z.B. ein Greifer), welches die lösbare Verbindung zu dem mit dem Träger-Flugobjekt auszurichtenden weiteren Flugobjekt bzw. Bodenstation herstellt, in mehreren (zumeist drei) zueinander rechtwinkligen Achsen drehbar gelagert. Das Koppelelement befindet sich in einem inneren oder äußeren Ring und kann zum einen durch seine Schwerpunktlage und/oder durch eine elektronische Ansteuerung jederzeit eine für die sichere Ankopplung notwendige vorgegebene Stellung im Raum beibehalten, auch wenn die kardanische Aufhängung in der Lage beeinflusst wird.

In noch einer weiteren Ausgestaltungsform der Erfindung umfasst der Ausgleichsmechanismus ein Sensorsystem zur Erfassung der Relativpositionen und/oder-bewegungen zwischen dem Träger-Flugobjekt und dem weiteren Flugobjekt oder der Bodenstation, wobei das Sensorsystem wiederum zumindest einen Sensor umfasst, ausgewählt aus der Gruppe: Lidar-Sensor, Kamera mit Form- und/oder Mustererkennung, insbesondere aktiver LED-Mustererkennung, Lasersensor und Satellitennavigationssensor, insbesondere RTK-GPS-Sensor.

Der Ausgleichsmechanismus kann sich der vorgenannten Sensoren bedienen, um die Relativpositionen und/oder -bewegungen zu überwachen und über die Aktuatorik des Ausgleichsmechanismus eingeleitete Ausgleichsbewegungen dann die positionelle Kongruenz zwischen Träger-Flugobjekt und weiterem Flugobjekt bzw. Bodenstation herzustellen. So können elektronische Kameras zur visuellen Überwachung und Steuerung dieser Ausgleichsbewegungen eingesetzt werden. Durch Erkennung einer Form und/oder eines Musters (insbesondere LED-Musters) als Referenz ist es mithilfe der Kamera möglich, die Abweichungen zwischen der aktuellen Relativposition und der für den Produktaustausch erforderlichen Relativposition zu erfassen, um dann ggf. korrigierende Ausgleichsbewegungen einzuleiten.

Dabei ist es besonders bevorzugt, wenn der Ausgleichsmechanismus weiter eine Steuereinheit umfasst, die konfiguriert ist, basierend auf den vom Sensorsystem erfassten Relativpositionen und oder -bewegungen den mindestens einen ersten Aktuator und/oder den mindestens einen zweiten Aktuator zur entsprechenden Bewegungskontrolle der kinematischen Ketten des Ausgleichsmechanismus anzusteuern.

Durch die im Ausgleichsmechanismus verbaute Aktuatorik wird es möglich, steuernd in die Relativbewegungen zwischen dem Träger-Flugobjekt und dem weiteren Flugobjekt bzw. der Bodenstation einzugreifen. In einer ersten Phase erfolgt ein Ausgleich der Relativbewegungen, um ein Ankoppeln des Endeffektors zu ermöglichen. In einer anschließenden Phase erfolgt eine Bewegungskontrolle der beiden gekoppelten Flugobjekte und/oder des Ausgleichsmechanismus, um das oder die Flugobjekte aktiv an eine für den sicheren Produktaustausch notwendige Relativposition heranzuführen. Eine Steuerung des Ausgleichsmechanismus zum aktiven Aneinanderheranführen der beiden Flugobjekte kann nur dann vorgesehen sein, wenn dieses aktive Aneinanderheranführen durch eine Steuerung des oder der Flugobjekte einen kritischen Zustand einnimmt (z.B. zu schnell oder in der falschen Richtung erfolgt). Abschließend bedarf es einer weiteren Bewegungskontrolle der beiden gekoppelten Flugobjekte und/oder des Ausgleichsmechanismus, um ein sicheres Entkoppeln vom weiteren Flugobjekt bzw. der Bodenstation zu ermöglichen.

Gemäß noch einer weiteren Ausgestaltung des erfindungsgemäßen Ausgleichsmechanismus umfasst dieses ein Kommunikationssystem mit einer drahtlosen Kommunikationsschnittstelle zur Übertragung von Daten, betreffend Relativpositionen und oder-bewegungen und/oder betreffend auszutauschende Produkte, via Funk, LTE oder 5G direkt zwischen dem Träger-Flugobjekt und dem weiteren Flugobjekt oder indirekt durch Zwischenschaltung eines boden- oder luftgebundenen Masters.

Mit einem solchen Kommunikationssystem werden die Daten zwischen den Flugobjekten (ggf. unter Zwischenschaltung eines zentralen Master-Systems auf dem Boden oder in der Luft) in Echtzeit übermittelt. Dadurch kann die Flugsicherheit, gerade in den kritischen Phasen der Ankopplung, des Produktaustausches und der Entkopplung, erhöht werden. Für diesen Datenaustausch kann in effizienter Weise auf die bereits bestehende Mobilinfrastruktur zurückgegriffen werden.

Schließlich zeichnet sich ein erfindungsgemäßes Träger-Flugobjekt, insbesondere Drohne, dadurch aus, dass es mit zumindest einem oben beschriebenen Ausgleichsmechanismus ausgerüstet ist.

Dabei kann die Nutzung von mehreren Ausgleichsmechanismen an einem einzigen Träger-Flugobjekt helfen, hohe Belastungen aufzunehmen.

Der Terminus "Träger-Flugobjekt" wird im Vorhergehenden und Folgenden verwendet, um das mit dem erfindungsgemäßen Ausgleichsmechanismus ausgerüstete Flugobjekt zu kennzeichnen und eindeutig von dem "weiteren Flugobjekt" zu unterscheiden, in Bezug auf welches die positionelle Kongruenz zum sicheren Produktaustausch herzustellen ist. Ein solches Träger-Flugobjekt hat die Fähigkeit eine gewünschte Relativposition zwischen Träger-Flugobjekt und weiterem Flugobjekt bzw. zwischen Träger-Flugobjekt und Bodenstation aktiv einstellen und beibehalten zu können, um den sicheren Produktaustausch zwischen Träger-Flugobjekt und weiterem Flugobjekt bzw. Bodenstation zu gewährleisten.

Die Erfindung wird unter Bezugnahme auf die Zeichnungen nachfolgend näher erläutert. Dabei zeigen:
- Fig. 1: eine Frontansicht auf ein Träger-Flugobjekt mit einem Ausgleichsmechanismus nach einem ersten Ausführungsbeispiel der Erfindung in einem von einem weiteren Flugobjekt entkoppelten Zustand;
- Fig. 2: eine Frontansicht auf ein Träger-Flugobjekt mit einem Ausgleichsmechanismus nach einem zweiten Ausführungsbeispiel der Erfindung;
- Fig. 3: eine Frontansicht auf ein Träger-Flugobjekt mit einem Ausgleichsmechanismus nach einem dritten Ausführungsbeispiel der Erfindung; und
- Fig. 4a bis 4e: Frontansichten auf ein Träger-Flugobjekt mit einem erfindungsgemäßen Ausgleichsmechanismus und auf ein weiteres Flugobjekt in zeitlich aufeinanderfolgenden Phasen der Kopplung, des Produktaustausches und der Entkopplung.

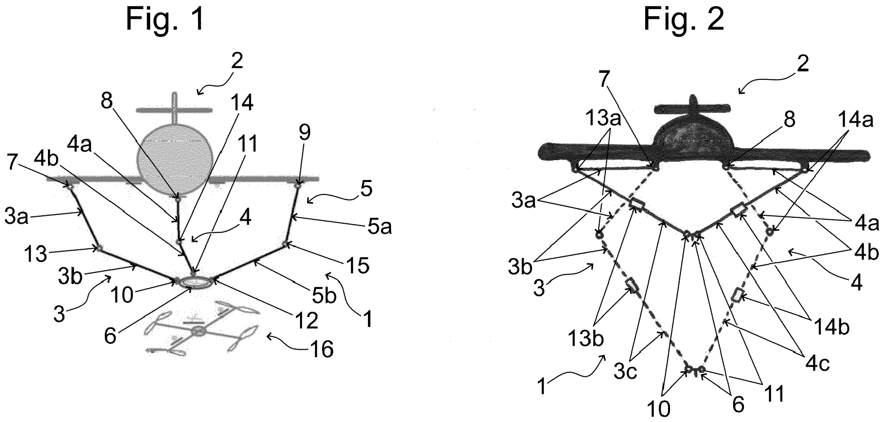

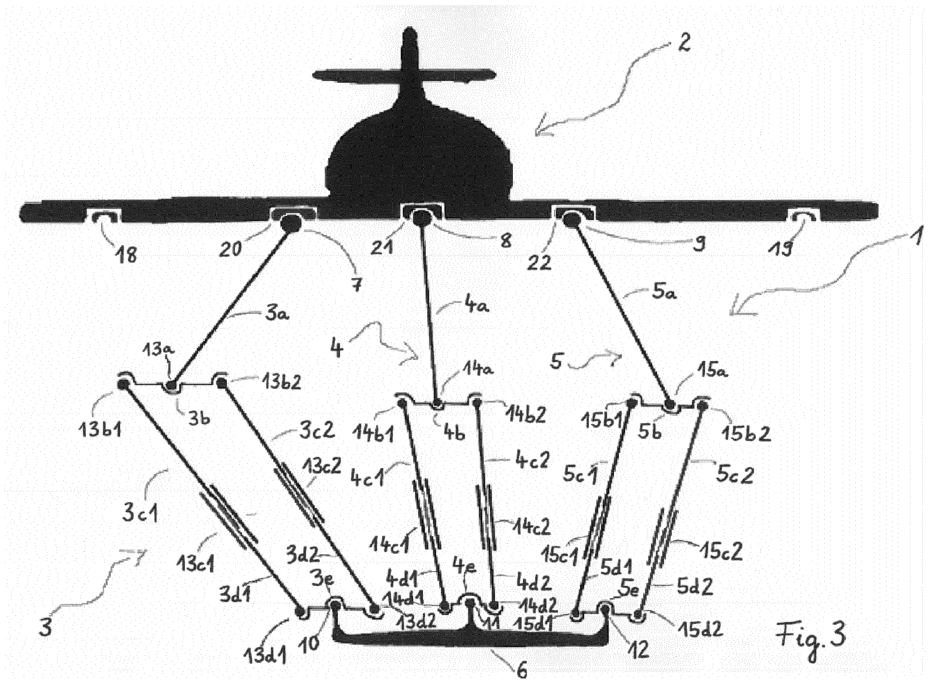

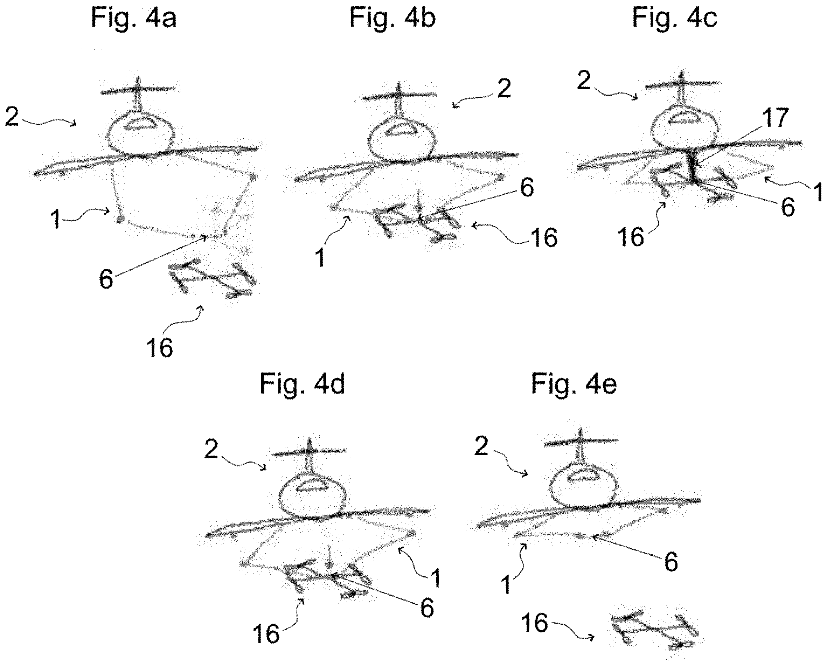

Der erfindungsgemäße Ausgleichsmechanismus 1 bildet eine in sich geschlossene kinematische Einheit, die aus mehreren kinematischen Ketten 3, 4, 5 - im Fall des in Fig. 1 und 3 dargestellten Ausführungsbeispiels aus drei kinematischen Ketten 3, 4, 5 und im Fall des in Fig. 2 und 4a bis 4e dargestellten Ausführungsbeispiels aus zwei kinematischen Ketten 3, 4 - besteht. In allen Ausführungsbeispielen stellen die kinematischen Ketten 3, 4, 5 eine gelenkige Verbindung zwischen einer an der Unterseite des Träger-Flugobjektes 2 angeordneten Trägerplattform 20, 21, 22, die integral mit dem Rumpf und den Flügeln des Träger-Flugobjektes 2 ausgeführt sein kann, und dem Endeffektor 6 her. Der Endeffektor 6 bildet dabei einen Koppler, welcher mit einem entsprechenden Gegenkoppler am auszurichtenden Gegenstand verbunden wird, um anschließend zwischen diesem Gegenstand und dem Träger-Flugobjekt 2 eine positionelle Kongruenz herzustellen und beizubehalten, die z.B. zur Durchführung eines störungsfreien Produktaustausches unabdingbar ist.

Gemäß Fig. 1 bis 4e kann es sich bei diesem vorgenannten Gegenstand z. B. um ein weiteres Flugobjekt 16 handeln, welches sich in Übereinstimmung zum Träger-Flugobjekt 2 gerade in einem Flugzustand (Schwebeflug, Horizontalflug, Sink- oder Steigflug) befindet. In einem solchen Flugzustand stellen Wind und Turbulenzen aber stochastische Prozesse dar, die kaum vorhersehbar sind und daher eine präzise Relativpositionierung der beiden Flugobjekte in erheblichem Maße erschweren. Handelt es sich - wie in Fig. 1 und Fig. 4a bis 4e dargestellt - bei den beiden Flugobjekten 2, 16 jeweils um ein UAV (sog. Drohne), dann können diese Probleme in der Relativpositionierung den Produktaustausch oder sonstige Interaktionsaufgaben zwischen den beiden Flugobjekten 2, 16 behindern oder sogar verhindern. Die zeitlich nächste Position eines UAV in der Luft kann zudem nicht exakt vorhergesagt werden. Der erfindungsgemäße Ausgleichsmechanismus 1 schafft Abhilfe für diese vorgenannten Probleme.

Die in Fig. 1, 2 und 3 dargestellten Kinematiken sind exemplarisch zu verstehen. Wichtig zur Erfüllung der Ausgleichsfunktion ist, dass sich durch den kinematischen Aufbau des Ausgleichsmechanismus 1 am Endeffektor 6 mindestens ein und (im idealen Fall) drei translatorische Freiheitsgrade ergeben. Somit kann durch eine geeignete Ansteuerung der (zumindest an den ersten und/oder zweiten Gelenken 7, 8, 9, 10, 11, 12 vorgesehen) Aktuatoren in einem ersten Schritt zunächst ein Ausgleich der positionellen Inkongruenz zwischen dem Endeffektor 6 und dem weiteren Flugobjekt 16 zur Herstellung einer Kopplung erfolgen und daraufhin in einem zweiten Schritt ein Ausgleich der positionellen Inkongruenz zwischen den miteinander gekoppelten Flugobjekten 2, 16 in allen drei Raumrichtungen erzielt werden. Zur Erreichung dieses Ziels stehen im Hinblick auf die Anzahl und Auswahl der Gelenke verschiedene Möglichkeiten offen.

Der Ausgleichsmechanismus 1 erlaubt nicht nur das schnelle Koppeln zweier Flugobjekte, bspw. zweier UAVs, sondern ermöglicht auch die Einleitung aktiver Ausgleichsbewegungen in das Träger-Flugobjekt 2 und/oder das weitere Flugobjekt 16. Jedoch können - wie bereits oben erwähnt - diese aktiven Ausgleichsbewegungen auch gänzlich oder teilweise durch zumindest eines der beiden Flugobjekte 2, 16 vollzogen werden.

Durch die mittels Steuerung der Flugobjekte 2, 16 selbst und/oder mittels Steuerung des Ausgleichsmechanismus 1 bewirkten aktiven Ausgleichsbewegungen wird die Relativposition zwischen den beiden Flugobjekten 2, 16 präzise so eingestellt und gehalten, dass ein störungsfreier Produktaustausch oder eine sonstige Interaktion zwischen den beiden Flugobjekten 2, 16 möglich wird. Im Fall eines Produktaustausches zwischen den Flugobjekten 2, 16 kann es sich bei den ausgetauschten Produkten um Festprodukte (bspw. Pakete, wie auf dem Gebiet der Paket- oder Logistikdrohnen) oder um Flüssigprodukte (bspw. Wasser oder Pflanzenschutzmittel, wie auf dem Gebiet der in der modernen Landwirtschaft eingesetzten Sprühdrohnen) handeln. Diese Einsatzbeispiele sind aber nicht beschränkend auszulegen. So können die vorteilhaften Wirkungen des erfindungsgemäßen Ausgleichsmechanismus 1 bei jeglichen Flugobjekt-Typen (bemannt oder unbemannt) zur Entfaltung gelangen. Neben Drohnen wären hier auch zivile oder militärische Flugzeuge, sonstige Multicopter, (insbesondere elektrische) VTOL-Flugzeuge oder Ornithopter zu nennen.

Wenngleich auch eine asymmetrische Verteilung der kinematischen Ketten an einem Träger-Flugobjekt vorstellbar wäre, sind sowohl in Fig. 1 als auch in Fig. 2 als auch in Fig. 3 die kinematischen Ketten 3, 4, 5 jeweils symmetrisch mit der Unterseite des Träger-Flugobjektes 2 und mit dem Umfang des Endeffektors 6 verbunden. Dies bedeutet, dass bei dem in Fig. 1 und 3 illustrierten ersten und dritten Ausführungsbeispiel des Ausgleichsmechanismus 1 eine Verteilung in Umfangsrichtung der ersten, jeweils mit dem Endeffektor 6 verbundenen Enden der drei kinematischen Ketten 3, 4, 5 und eine Verteilung in Umfangsrichtung der zweiten, jeweils mit dem Träger-Flugobjekt 2 verbundenen Enden der drei kinematischen Ketten 3, 4, 5 jeweils in einem gleichmäßigen Winkelabstand von 120° erfolgt. Infolgedessen sind auch die drei kinematischen Ketten 3, 4, 5 in einem unbetätigten symmetrischen Ausgangszustand, wenn der Endeffektor 6 mit der durch Massezentrum des Träger-Flugobjektes 2 verlaufenden Gravitationsachse fluchtet, in einem gleichmäßigen Winkelabstand von 120° zueinander angeordnet. Im zweiten Ausführungsbeispiel nach Fig. 2 befinden sich sowohl die ersten, mit dem Endeffektor 6 verbundenen Ende der beiden kinematischen Ketten 3, 4 als auch die gegenüberliegenden zweiten, mit dem Träger-Flugobjekt 2 verbundenen Enden der beiden kinematischen Glieder 3, 4 einander diametral gegenüberliegend in einem Winkelabstand von 180° zueinander.

Darüber hinaus sind sowohl in Fig. 1 als auch in Fig. 2 als auch in Fig. 3 die kinematischen Ketten 3, 4, 5 des Ausgleichsmechanismus 1 jeweils in identischer Weise aus mehreren gleichförmigen Gliedern 3a, 3b, 3c, 3c1, 3c2, 3d1, 3d2, 3e, 4a, 4b, 4c, 4c1, 4c2, 4d1, 4d2, 4e, 5a, 5b, 5c1, 5c2, 5d1, 5d2, 5e aufgebaut. (Die Glieder können jedoch auch unterschiedlich geformt sein, insbesondere unterschiedliche Längen aufweisen.) Bei diesen Gliedern 3a, 3b, 3c, 3c1, 3c2, 3d1, 3d2, 3e, 4a, 4b, 4c, 4c1, 4c2, 4d1, 4d2, 4e, 5a, 5b, 5c1, 5c2, 5d1, 5d2, 5e kann es sich um Stab- oder Seilabschnitte handeln. Allerdings unterscheiden sich die beiden Ausführungsbeispiele nach Fig. 1, 2 und 3 im Hinblick auf die Anzahl und Verbindung dieser Glieder 3a, 3b, 3c, 3c1, 3c2, 3d1, 3d2, 3e, 4a, 4b, 4c, 4c1, 4c2, 4d1, 4d2, 4e, 5a, 5b, 5c1, 5c2, 5d1, 5d2, 5e.

Gemäß Fig. 1 besteht jede kinematische Kette 3, 4, 5 aus genau zwei Gliedern - nämlich einem oberen Glied 3a, 4a, 5a, welches jeweils über ein erstes Gelenk 7, 8, 9, jeweils in der Form eines Drehgelenkes, mit der Trägerplattform an der Unterseite des Träger-Flugobjektes 2 verbunden ist, und einem unteren Glied 3b, 4b, 5b, welches jeweils über ein zweites Gelenk 10, 11, 12, jeweils in der Form eines Kreuzgelenkes (Universal Joint), mit dem Endeffektor 6 verbunden ist. Zusätzlich sind die oberen Glieder 3a, 4a, 5a mit den unteren Gliedern 3b, 4b, 5b jeweils über ein drittes Gelenk 13, 14, 15 verbunden. Diese dritten Gelenke (Zwischengelenke) 13, 14, 15 sind ebenfalls jeweils als Kreuzgelenke ausgebildet, um jeweils eine (passive oder aktive) Drehung des unteren Glieds 3b, 4b, 5b relativ zum oberen Glied 3a, 4a, 5a zu gestatten. Im Ergebnis besitzt der in Fig. 1 dargestellte Ausgleichsmechanismus 1 somit drei translatorische Freiheitsgrade.

Durch diesen kinematischen Aufbau bewegt sich der Endeffektor 6 stets rein translatorisch in drei Freiheitsgraden (f = 3), sodass ein schneller Ausgleich von Relativbewegungen möglich wird, ohne dadurch die Kopplung am Endeffektor 6 zu beeinträchtigen.

Darüber hinaus werden zumindest die flugobjektseitigen Drehgelenke (ersten Gelenke) 7, 8, 9 mit den oberen Gliedern 3a, 3b, 3c durch einen (nicht dargestellten) Aktuator angetrieben. Die Stellbewegung des jeweiligen Aktuators kann elektromotorisch, pneumatisch und/oder hydraulisch erzeugt werden. Insbesondere kann jedem ersten Gelenk 7, 8, 9 jeweils ein erster Servoantrieb zugeordnet sein, sodass drei in einem 120°-Winkel zueinander angeordnete Servoantriebe vorliegen. Anzahl und Positionierung der Getriebe hängen jedoch von der genauen Getriebewahl ab und sind nicht zwingend festgelegt. Alternativ oder zusätzlich können Aktuatoren (z.B. mit Servoantrieben) auch auf oder im bewegten Endeffektor 6 vorgesehen sein, um relative Winkeländerungen zwischen Endeffektor 6 und unterem Glied 3b, 4b, 5b durch eine aktive Drehung um die jeweiligen Kreuzgelenke (zweiten Gelenke) 10, 11, 12 zu ermöglichen. Zudem ist auch vorstellbar, Aktuatoren in die kinematischen Ketten 3, 4, 5 zu integrieren, um relative Winkeländerungen zwischen den beiden jeweiligen Gliedern 3a, 3b, 4a, 4b, 5a, 5b durch mindestens einen Servoantrieb an dem jeweiligen mittleren Kreuzgelenk (dritten Gelenk) 13, 14, 15 aktiv zu erzeugen. Es ist für die Zwecke der vorliegenden Erfindung jedoch bereits ausreichend, wenn nur die Bewegung an bzw. um ein einziges Gelenk durch einen entsprechenden Aktuator aktiv angesteuert wird. Die Bewegungen an und/oder um die übrigen Gelenke geschehen dann in passiver Weise infolge der kinematischen Verbindung mit dem aktiv angesteuerten Gelenk.

Es ist vorteilhaft, Mittel zur mechanischen Begrenzung der Bewegung der Gelenke 7, 8, 9, 10, 11, 12, 13, 14, 15 vorzusehen, z.B. in Form von Bremsen oder sonstigen Verriegelungsmechanismen. So verhindern selbstblockierende Bremsen ein Absacken des Endeffektors 6 bei Ausfall der Servo-Spannungsversorgung und erlauben eine Versteifung des Systems, um in der Phase der Bewegungskontrolle, kritische Bewegungen zu verhindern.

Die Gestalt des Ausgleichsmechanismus 1 nach Fig. 1 ähnelt der einer umgedrehten dreiseitigen Pyramide, wobei die einander benachbarten kinematischen Ketten 3, 4, 5 jeweils ähnlich dem griechischen Buchstaben Delta von den ersten flugobjektseitigen Gelenken 7, 8, 9 zu den zweiten endeffektorseitigen Gelenken 10, 11, 12 hin zulaufen. Eine solche Delta-Form des Ausgleichsmechanismus 1 zeichnet sich durch ihre hohe Präzision und gleichzeitig hohe Reaktionsgeschwindigkeit aus, was ihren Einsatz für den Ausgleich von Relativbewegungen, die stochastisch und plötzlich auftreten, prädestiniert.

Eine mögliche Erweiterung des Ausgleichsmechanismus 1 um ein weiteres drittes Gelenk 13b, 14b in der Form eines Teleskop-Gelenkes ist in Fig. 2 wiedergegeben. Wie bereits oben beschrieben, besteht dieser Ausgleichsmechanismus 1 in exemplarischer Weise aus zwei diametral gegenüberliegenden kinematischen Ketten 3, 4. Diese kinematischen Ketten 3, 4 sind - in weiterer Abweichung zu Fig. 1 - jeweils aus drei Gliedern 3a, 3b, 3c, 4a, 4b, 4c gebildet. Die oberen Glieder 3a, 4a sind in Übereinstimmung zu Fig. 1 jeweils über ein erstes Gelenk (Drehgelenk) 7, 8 mit der Trägerplattform an der Unterseite des Träger-Flugobjektes 2 verbunden, während die unteren Glieder 3c, 4c jeweils über ein zweites Gelenk (Drehgelenk) 10, 11 mit dem Umfang des Endeffektors 6 verbunden sind.

In Abweichung zum ersten Ausführungsbeispiel nach Fig. 1 ist jedoch in den kinematischen Ketten 3, 4 nach Fig. 2 jeweils ein zusätzliches, mittleres Glied 3b, 4b vorgesehen, welches jeweils zwischen dem oberen Glied 3a, 4a und dem unteren Glied 3c, 4c angeordnet ist. Dieses mittlere Glied 3b, 4b ist mit dem oberen Glied 3a, 4a über ein drittes Gelenk 13a, 14a in der Form eines Drehgelenkes verbunden. Die Verbindung zwischen dem mittleren Glied 3b, 4b und dem unteren Glied 3c, 4c erfolgt jeweils über ein weiteres Gelenk in der Form eines Teleskop-Gelenkes 13b, 14b. Diese Teleskop-Gelenke 13b, 14b werden jeweils durch einen Aktuator betätigt und bieten somit die Möglichkeit, die unteren Glieder 3c, 4c jeweils stufenlos gegenüber den mittleren Gliedern 3b, 4b ein- und auszufahren. Jedoch können diese Teleskop-Gelenke 13b, 14b auch - wie oben dargelegt - lediglich passiv bewegt werden.

Auf diese Weise besteht die Möglichkeit die Konfiguration des Systems zu verändern oder zu wechseln. Dadurch können die Freiheitsgrade des Systems verändert werden. Zudem ermöglicht die Erweiterung um die beiden Teleskopachsen gemäß Fig. 2 einen größeren Arbeitsbereich für den Ausgleichsmechanismus 1. Somit kann der Ausgleichsmechanismus 1 mittels seines Endeffektors 6 auch mit anfänglich größerem vertikalen Abstand navigierende Flugobjekte 16 gegenüber dem Träger-Flugobjekt 2 präzise ausrichten.

Insbesondere aber ermöglichen die beiden zusätzlichen Teleskopachsen vorteilhafterweise einen Wechsel der Kinematik des Ausgleichsmechanismus 1 von einer Phase des Ausgleichs der Relativpositionen zwischen den beiden Flugobjekten 2, 16 in einer, zwei oder drei Raumrichtung(en) (wie durch den Übergang von Fig. 4a nach Fig. 4b schematisiert) zu einer Phase des im Wesentlichen linearen oder kurvenförmigen Heranführens des weiteren Flugobjektes 16 in seine endgültige Parkposition (wie durch den Übergang von Fig. 4b nach Fig. 4c schematisiert).

In Fig. 2 ist mit gestrichelten Linien ein Zustand gezeigt, bei dem sich das Teleskop-Gelenk 13b, 14b in einem ausgefahrenen Zustand befindet, und mit durchgezogenen Linien ein Zustand gezeigt, bei dem sich das Teleskop-Gelenk 13b, 14b in einem eingefahrenen Zustand befindet. Im eingefahrenen Zustand sind die jeweils zwischen den oberen Gliedern 3a, 3b und den mittleren Gliedern 3b, 4b der kinematischen Ketten 3, 4 angeordneten Drehgelenke (dritten Gelenke) 13a, 14a jeweils lösbar an den Flügeln des Träger-Flugobjektes 2 arretiert (siehe diesbezüglich die Fixiereinrichtungen 18, 19 in Fig. 3), um eine Bewegung der oberen Glieder 3a, 4a zu verhindern und somit die statische Bestimmtheit des Ausgleichsmechanismus 1 wieder herzustellen.

Dem Endeffektor 6 werden durch die dargestellte Kinematik zwei translatorische Freiheitsgrade verliehen, um Ausgleichsbewegungen zur Eliminierung von Relativbewegungen und Aufrechthaltung einer stabilen Relativposition in den zwei Raumrichtungen ausführen zu können. Außerdem können abermals in allen Gelenken (Drehgelenken oder Teleskop-Gelenken) 7, 8, 10, 11, 13a, 13b, 14a, 14b des Ausgleichsmechanismus 1 nach Fig. 2 Verriegelungsvorrichtungen und/oder Bremsen zum Einsatz gelangen, welche mechanisch, hydraulisch, pneumatisch oder elektrisch angezogen oder gelöst werden können. Auf diese Weise werden Bewegungen an den bzw. um die Gelenke 7, 8, 10, 11, 13a, 13b, 14a, 14b sicher unterbunden. Solche Bewegungen müssen insbesondere dann ausgeschlossen werden, wenn das angekoppelte weitere Flugobjekt 16 seine endgültige Relativposition erreicht hat und evtl. ein Austauschmechanismus 17 betätigt wird, um den Produktaustausch zwischen den Flugobjekten 2, 16 durchzuführen. Um hier Störungsfreiheit zu garantieren, muss das angekoppelte weitere Flugobjekt 16 relativ zum Träger-Flugobjekt 2 durch den Ausgleichsmechanismus 1 in einer bestimmten Relativposition fixiert werden.

Ein weiteres Ausführungsbeispiel des erfindungsgemäßen Ausgleichsmechanismus 1 ist in Fig. 3 wiedergegeben. Wie in Fig. 1 besteht dieser Ausgleichsmechanismus 1 aus drei identischen kinematischen Ketten 3, 4, 5, die jeweils in identischer Weise aus mehreren gleichförmigen Gliedern 3a, 3b, 3c1, 3c2, 3d1, 3d2, 3e, 4a, 4b, 4c1, 4c2, 4d1, 4d2, 4e, 5a, 5b, 5c1, 5c2, 5d1, 5d2, 5e aufgebaut sind. (Die Glieder können jedoch auch unterschiedlich geformt sein, insbesondere unterschiedliche Längen aufweisen.) Gemäß Fig. 3 besteht jede kinematische Kette 3, 4, 5 aus sieben Gliedern. Ein oberes Glied 3a, 4a, 5a ist jeweils über ein als Drehgelenk ausgebildetes Endgelenk (erstes Gelenk) 7, 8, 9 mit einer Trägerplattform 20, 21, 22 an der Unterseite des Träger-Flugobjektes 2 verbunden. Dieses obere Glied 3a, 4a, 5a ist jeweils über ein als Drehgelenk ausgebildetes Zwischengelenk 13a, 14a, 15a mit einem zweiten Glied 3b, 4b, 5b verbunden. Über weitere als Drehgelenke ausgebildete Zwischengelenke 13b1 und 13b2, 14b1 und 14b2, 15b1 und 15b2 werden paarweise dritte Glieder 3c1 und 3c2, 4c1 und 4c2, 5c1 und 5c2 verbunden. Mit diesen dritten Gliedern 3c1 und 3c2, 4c1 und 4c2, 5c1 und 5c2 sind dann über weitere, als prismatische Gelenke ausgebildete Teleskop-Gelenke 13c1 und 13c2, 14c1 und 14c2, 15c1 und 15c2 die vierten Glieder 3d1 und 3d2, 4d1 und 4d2, 5d1 und 5d2 verbunden. Diese vierten Glieder 3d1 und 3d2, 4d1 und 4d2, 5d1 und 5d2 enden dann wie die ersten Glieder 3a, 3b 3c über weitere, jeweils als Drehgelenke ausgebildete Zwischengelenke 13d1 und 13d2, 14d1 und 14d2, 15d1 und 15d2 in den fünften Gliedern 3e, 4e, 5e. Diese fünften Glieder 3e, 4e, 5e sind dann jeweils über Endgelenke (zweite Gelenke) 10, 11, 12 mit dem Endeffektor 6 verbunden.

Im Ergebnis besitzt das in Fig. 3 dargestellte Ausführungsbeispiel des Ausgleichsmechanismus 1 somit drei translatorische Freiheitsgrade und vereint die Vorteile der bereits in Fig. 1 und 2 vorgestellten Ausführungsbeispiele des Ausgleichsmechanismus 1. Dafür sind ähnlich wie in Fig. 2 die Teleskop-Gelenke 13c1, 13c2, 14c1, 14c2, 15c1, 15c2 und wenn erforderlich die Drehgelenke 7, 8, 9, 10, 11, 12, 13a, 13b1, 13b2, 13d1, 13d2, 14a, 14b1, 14b2, 14d1, 14d2, 15a, 15b1, 15b2, 15d1, 15d2 über Bremsen, Aktuatoren oder Fixiereinrichtungen 18, 19 steuer- und/oder blockierbar. Darüber hinaus ist mechanisch, pneumatisch oder elektrisch sichergestellt, dass die jeweils miteinander durch das Teleskop-Gelenk gekoppelten dritten und vierten Glieder 3c1 und 3d1, 3c2 und 3d2, 4c1 und 4d1, 4c2 und 3d2, 5c1 und 5d1, 5c2 und 5d2 immer zueinander gleich lang sind. Auf diese Weise besteht die Möglichkeit die Konfiguration des Systems zu verändern oder zu wechseln, ohne dabei die Freiheitsgrade zu ändern.

Sowohl in Fig. 1 als auch in Fig. 2 als auch in Fig. 3 dient der Endeffektor 6 zur Kopplung mit dem weiteren Flugobjekt 16, zu welchem positionelle Kongruenz mithilfe des Ausgleichsmechanismus 1 hergestellt werden soll. Dieser Endeffektor 6 kann in einer besonders zweckmäßigen Ausgestaltung aus einer kardanischen Aufhängung bestehen. Vorteilhafterweise kann somit alleine unter Einwirkung der Schwerkraft und unabhängig von Lage oder Bewegung der Endeffektor 6 immer senkrecht zum Erdboden gehalten werden. In diesem Zusammenhang können auch Teile des Endeffektors 6 aus einem weichen (z.B. elastomeren) Material gebildet sein, um solche Stöße zu absorbieren. Insbesondere wird es dadurch möglich, auftretende Stöße durch das angekoppelte weitere Flugobjekt (UAV) 16 zu kompensieren.

Die zwischen Träger-Flugobjekt 2 und weiterem Flugobjekt 16 hergestellte Kupplung besteht zum einen aus einer Kupplungshälfte in der Form des Endeffektors 6 des Ausgleichsmechanismus 1 am Träger-Flugobjekt 2 und zum anderen aus einer damit form-, kraft- und/oder stoffschlüssig verbindbaren Kupplungshälfte in der Form des Gegenkopplers am weiteren Flugobjekt 16. Nach Herstellung des form-, kraft- und/oder stoffschlüssigen Kontakts zwischen diesen beiden Kupplungshälften liegt eine feste Verbindung zwischen Träger-Flugobjekt 2 und weiterem Flugobjekt 16 vor. In diesem fest verbundenen Zustand können anschließend durch Eingriff in die Flugsteuerungen der beiden Flugobjekte 2, 16 und/oder in die Bewegungssteuerung des Ausgleichsmechanismus 1 aktive Ausgleichsbewegungen eingeleitet werden, um die geforderte positionelle Kongruenz zwischen den beiden Flugobjekten 2, 16 herzustellen.

Der Ausgleichsmechanismus 6 umfasst ein Sensorsystem, welches im Träger-Flugobjekt 2 und/oder im damit zu koppelnden weiteren Flugobjekt 16 installiert sein kann, um die Relativpositionen und/oder -bewegungen zwischen den beiden Flugobjekten 2, 16 zu erfassen und als zu regelnde Eingangsgröße der Steuerung des Ausgleichsmechanismus 1 zuzuführen. Beispielsweise kann hier auf bereits vorhandene interne Sensoren des Träger-Flugobjektes 2 und/oder weiteren Flugobjektes 16 zurückgegriffen werden. Es können aber auch zusätzliche, alleine dem Ausgleichsmechanismus 1 zugeordnete Sensoren im Träger-Flugobjekt 2 und/oder weiteren Flugobjekt 16 eingebaut sein.

Bei diesen vorhandenen oder zusätzlich einzubauenden Sensoren kann es sich um Lidar-Sensoren und/oder um Kameras mit Formerkennung (insbesondere mit Erkennung der Form des zu koppelnden Flugobjektes 16, wie UAV) oder mit Mustererkennung (insbesondere mit aktiver LED-Mustererkennung), um Lasersensoren oder um satellitenbasierte Navigationssensoren, z.B. (RTK-)GPS-Sensoren handeln. Es sind jedoch auch andere sensorische Lösungen implementierbar, solange hierdurch Daten geliefert werden, die für die Steuerung des Ausgleichsmechanismus 1 und/oder eines zum Produktaustausch verwendeten Austauschmechanismus 17 relevant sind.

Demnach können also die oben genannten Daten in eine Steuereinheit eingelesen werden, die einen elektronischen Regler zur Steuerung des Ausgleichsmechanismus 1 beinhaltet. Die sensorisch erfassten Daten zur aktuellen Relativposition/-bewegung bilden dabei die Regelgröße (Istwert) und der Regler berechnet die Stellgrößen für die Aktuatoren des Ausgleichsmechanismus 1, um die Bewegung des Endeffektors 6 so zu steuern, dass die Regelgröße (Istwert) auf die gewünschte Führungsgröße (Sollwert) gebracht wird. Demzufolge wird die Kompensation der Relativbewegungen (und/oder nach dem Koppeln die Kompensation der am Endeffektor 6 auftretenden Kräfte und Momente) durch die Bewegungssteuerung des Ausgleichsmechanismus 1 und ggf. zusätzlich durch einen Eingriff in die Flugsteuerung der miteinander gekoppelten Flugobjekte 2, 16 ermöglicht.

Zusätzlich kann der Ausgleichsmechanismus 1 über ein Kommunikationssystem verfügen, um Daten, betreffend die Relativpositionen und/oder -bewegungen zwischen dem Träger-Flugobjekt 2 und dem weiteren Flugobjekt 16 und/oder betreffend die zwischen diesen Flugobjekten 2, 16 durchzuführenden Interaktionen, zu senden bzw. zu empfangen. Dieser Datenaustausch erfolgt über eine drahtlose Kommunikationsschnittstelle entweder direkt von Flugobjekt zu Flugobjekt oder unter Zwischenschaltung einer zentralen Steuerung (Master) am Boden oder in der Luft. Auf Grundlage dieser ausgetauschten Daten können Eingriffe in die Flugsteuerung des Träger-Flugobjektes 2 und/oder des weiteren Flugobjektes 2 vorgenommen werden, um den Kopplungs-, Ausgleichs-, Interaktions- und Entkopplungsvorgang gemäß Fig. 4a bis 4e zu unterstützen bzw. zu ermöglichen. Die drahtlose Übertragung der Daten kann durch Empfang/Senden von Funksignalen und/oder LTE-Signalen und/oder 5G-Signalen erfolgen. So kann in effizienter Weise auf die bereits bestehende und weit verzweigte Mobilinfrastruktur zurückgegriffen werden.

Die zentrale Achse des Ausgleichsmechanismus 1, die in der symmetrischen Ausgangsstellung (wie in Fig. 2 gezeigt) durch den Endeffektor 6 verläuft, verläuft vorteilhafterweise auch durch den Massenmittelpunkt der Trägerplattform 20, 21, 22 am Rumpf des Träger-Flugobjektes (UAV) 2, sodass Ungleichmäßigkeiten in den auf das Träger-Flugobjekt 2 einwirkenden Belastungen minimiert werden. Dabei kann der Ausgleichsmechanismus 1 - wie jeweils schematisch in Fig. 1, 2 und 3 gezeigt - unter dem Massenmittelpunkt der Trägerplattform 20, 21, 22 am Rumpf und an den Flügeln des Träger-Flugobjektes (UAV) 2 angebracht sein. Jedoch ist es auch vorstellbar, den Ausgleichsmechanismus 1 über dem Massenmittelpunkt im und/oder am Rumpf und/oder im und/oder an den Flügeln des Träger-Flugobjektes (UAV) 2 anzubringen.

Obgleich in Fig. 1, 2 und 3 jeweils eine gewichtsmäßig austarierte, symmetrische Anbringung des Ausgleichsmechanismus 1 am Träger-Flugobjekt (UAV) 2 zu sehen ist, so ist dennoch auch eine asymmetrische Anbringung des Ausgleichsmechanismus an einem Träger-Flugobjekt, bspw. im oder am Flügel eines Träger-Flugobjektes denkbar. In diesem Fall kann ein bewegliches Gegengewicht am anderen Flügel vorgesehen sein, um die Lasten in Querachsenrichtung des Träger-Flugobjektes optimal austarieren zu können.

Alternativ oder ergänzend können die ersten Gelenke 7, 8, 9 des Ausgleichssystems 1 (insbesondere linear) beweglich am Träger-Flugobjekt 1 gelagert sein, um so die auf das Träger-Flugobjekt 2 einwirkenden Kräfte umzulenken. Des Weiteren können Gewichtsverschiebungen infolge der gesteuerten Bewegungen des Ausgleichssystems 1 und/oder dabei entstehende Momente aktiv kompensiert werden, indem bewegliche Gegengewichte am oder im Träger-Flugobjekt 2 veranlasst werden, entsprechende Gegenbewegungen auszuführen. Auch können vorhandene oder zusätzlich installierte Stellsysteme, wie z.B. Klappen oder sonstige Stellflächen, am Träger-Flugobjekt 2 so angesteuert werden, dass die durch den Ausgleichsmechanismus 1 bedingten Momenteinwirkungen kompensiert werden.

Fig. 4a bis 4e dienen der schematischen Veranschaulichung der Funktionsweise des erfindungsgemäßen Ausgleichsmechanismus 1 anhand einer zeitlichen Abfolge der verschiedenen Phasen der Ankopplung, Fixierung und Entkopplung eines weiteren Flugobjektes 16 an bzw. von einem mit diesem Ausgleichsmechanismus 1 ausgerüsteten Träger-Flugobjekt 2.

Während einer ersten, in Fig. 4a schematisierten Phase werden die Aktuatoren des Ausgleichsmechanismus 1 so gesteuert, dass eine Ankopplung des Endeffektors 6 an einen entsprechenden Gegenkoppler des weiteren Flugobjektes 16 erfolgen kann. Natürlich ist diese Ankopplung erst dann durchführbar, wenn das weitere Flugobjekt 16 in einen vom Endeffektor 6 des Ausgleichsmechanismus 1 maximal erreichbaren Bewegungsbereich eingetreten ist. Demzufolge muss vorab durch Eingriff in die jeweiligen Flugsteuerungen das Träger-Flugobjekt 2 und/oder das weitere Flugobjekt 16 so navigiert werden, dass der Gegenkoppler des weiteren Flugobjektes 16 in den maximalen Bewegungsbereich des Endeffektors 6 gelangt. Dann kann die in Fig. 4a illustrierte Bewegungskontrolle des Ausgleichsmechanismus 1 initiiert werden zur Herstellung der Kopplung zwischen dem Endeffektor 6 des Ausgleichsmechanismus 1 am Träger-Flugobjekt 2 und dem entsprechenden Gegenkoppler am weiteren Flugobjekt 16.

Fig. 4b illustriert die Bewegungskontrolle des Ausgleichsmechanismus 1 im angekoppelten Zustand. Diese Bewegungskontrolle, welche durch eine entsprechende Ansteuerung der Aktuatoren und/oder Bremsen im Ausgleichsmechanismus 1 ausgeführt wird, bewirkt, dass das Träger-Flugobjekt 2 und das weitere Flugobjekt 16 aneinander herangeführt werden, bis schließlich eine Relativposition gemäß Fig. 4c erreicht ist, bei der eine positionelle Kongruenz zwischen den Flugobjekten 2, 16 hergestellt ist und die gewünschte Interaktion (z.B. Produktaustausch mithilfe des Austauschmechanismus 17) stattfinden kann. Jedoch kann dieses Aneinanderheranführen der beiden miteinander gekoppelten Flugobjekte 2, 16 auch durch die Flugobjekte 2, 16 selbst mittels Eingriffs in die entsprechenden Flugsteuerungen bewirkt werden.

Die bei diesem Aneinanderheranführen gemäß Fig. 4b auftretenden unerwünschten Kräfte und Momente werden durch den Ausgleichsmechanismus 1 in beide gekoppelten Flugobjekte 2, 16 in gleichem Maße eingeleitet und der Ausgleichsmechanismus 1 verhindert damit eine Relativbewegung. Die beiden miteinander gekoppelten Flugobjekte 2, 16 sind dabei ständig schwankenden Einflüssen (bspw. Umwelteinflüssen, wie Winden oder Böen) ausgesetzt. Ohne den erfindungsgemäßen Ausgleichsmechanismus 1 würden sich diese Einflüsse unmittelbar in einer Veränderung der Relativpositionen zwischen den beiden Flugobjekten 2, 16 niederschlagen. Mithilfe des erfindungsgemäßen Ausgleichsmechanismus 1 werden sich diese Einflüsse aber nicht auf die Relativpositionen auswirken und keine positionelle Inkongruenz verursachen.

Während der in Fig. 4c illustrierten Produktaustauschphase fungiert der Ausgleichsmechanismus 1 als Fixiervorrichtung, um die beiden Flugobjekte 2, 16 stabil in ihrer relativen Position zueinander zu halten. Im Träger-Flugobjekt 2 und/oder im damit fest gekoppelten weiteren Flugobjekt 16 wird dann ein Austauschmechanismus 17 aktiviert, um den Austausch eines festen und/oder flüssigen Produktes zwischen den Flugobjekten 2, 16 zu ermöglichen. Ein solcher Produktaustausch stellt jedoch nur eine Möglichkeit der Interaktion zwischen den beiden Flugobjekten 2, 16 dar. So kann die Interaktion auch lediglich in der Herstellung der festen Kopplung mittels des Ausgleichsmechanismus 1 bestehen, um den Transport des weiteren Flugobjektes 16 durch das Träger-Flugobjekt 2, z.B. zu einer Sammelstelle zwecks Wartung/Reparatur, zu erlauben.

Der in Fig. 4d gezeigte Schritt ist optional. Es ist aber aus Sicherheitsgründen erstrebenswert, nach Abschluss der Interaktion (z.B. des Produktaustausches mittels Austauschmechanismus 17) eine Bewegungskontrolle des Ausgleichsmechanismus 1 unter entsprechender Steuerung der Aktuatoren an den Gelenken durchzuführen, sodass die noch gekoppelten Flugobjekte 2, 16 wieder voneinander entfernt werden, bis ein Abstand erreicht ist, bei dem eine sichere Trennung der Kopplung gewährleistet werden kann.

In Fig. 4e ist schließlich bereits das Lösen der form-, kraft- und/oder stoffschlüssigen Verbindung am Endeffektor 6 des Ausgleichsmechanismus 1 erfolgt und das weitere Flugobjekt 16 ist vom Träger-Flugobjekt 2 zum Weiterflug freigegeben. Hiervor sollte eine wechselseitige Anpassung der Fluggeschwindigkeiten des Träger-Flugobjektes 2 und des weiteren Flugobjektes 16 stattfinden, um einen kontrollierten Flugzustand nach dem Entkoppeln zu gewährleisten. Nach der Trennung fliegen die beiden Flugobjekte 2, 16, von ihren jeweiligen Flugsteuerungen gelenkt, unabhängig voneinander auf ihrem jeweils programmierten Kurs weiter.

Abschließend werden verschiedene Möglichkeiten zur Ausgestaltung des schematisch in Fig. 4c angedeuteten Austauschmechanismus 17 dargelegt. Dieser Austauschmechanismus 17 dient dem Zwecke, in einer durch den Ausgleichsmechanismus 1 fixierten Relativposition (Übergabeposition) zwischen dem Träger-Flugobjekt 2 und dem weiteren Flugobjekt 16, ein festes oder flüssiges Produkt zwischen diesen beiden Flugobjekten 2, 16 auszutauschen. Die nachfolgenden Beispiele können, soweit sinnvoll, in beliebiger Weise kombiniert werden und sind nicht einschränkend zu verstehen.

Der Austausch stückiger Festprodukte zwischen den Flugobjekten 2, 16 kann z.B. unter Zuhilfenahme von Linearführungen (mit oder ohne Linearführungsblock) erfolgen. So können beide Flugobjekte jeweils mindestens eine Linearführung an einem beliebigen Anbringungsort besitzen, über welche ein Austausch fester Produkte zwischen den Flugobjekten stattfinden kann. Alternativ können die festen Produkte direkt zwischen den Frachträumen oder -fächern der beiden Flugobjekte 2, 16 ausgetauscht werden. Ebenfalls denkbar ist es, den Austausch fester Produkte mithilfe permanenter oder (umpolbarer) elektrischer Magnete an den Flugobjekten 2, 16 und/oder den festen Produkten selbst, oder mithilfe des Wechsels einer Befestigungs- und/oder Fixiervorrichtung (z.B. aus Krallen, Greifern, Riegeln oder sonstigen auf dem Markt erhältlichen Mechanismen) an beiden Flugobjekten 2, 16 und/oder den festen Produkten zu realisieren. Ein besonders einfacher Weg besteht darin, einen beweglichen Hebel an zumindest einem der Flugobjekte 2, 16 vorzusehen, wobei das zu transferierende feste Produkt an diesem beweglichen Hebel arretiert, dann durch z.B. Schieben oder Schwenken des Hebels an das andere Flugobjekt 2, 16 herangeführt und schließlich zur Übergabe vom Hebel gelöst wird. Das Arretieren und Lösen des festen Produktes am bzw. vom Hebel kann durch die oben erläuterten Mittel bewerkstelligt werden.

Bei allen vorgenannten Ausgestaltungsmöglichkeiten des Austauschmechanismus 17 kann zudem jeweils ein Schiebe- und/oder Ziehmechanismus eingesetzt werden, um die festen Produkte zu bewegen. Außerdem können Riegel die Förderbewegung begrenzen und/oder die festen Produkte ggf. fixieren. Des Weiteren können auch Rollen, Räder oder Kugeln an den Flugobjekten 2, 16 oder an den festen Produkten selbst vorhanden sein, um eine Förderbewegung zu erzeugen. Auch kann die Förderbewegung durch Komponenten aus gleitenden Materialien (z.B. Polyamid oder Polyethylen) unterstützt werden, die an diesen Produkten selbst und/oder an den miteinander gekoppelten Flugobjekten 2, 16 vorgesehen werden.

Liegt das zwischen den Flugobjekten 2 auszutauschende Produkt in einem flüssigen ungebundenen Zustand vor, so kann dieses Flüssigprodukt mit Hilfe einer Leitung (Schlauch oder Rohr) von einem Flugobjekt zum anderen gefördert werden. Diese Leitung kann beweglich oder fest an zumindest einem der beiden Flugobjekte 2, 16 montiert sein. Ein zusätzlicher Führungsmechanismus kann eine gezielte Bewegung (z.B. ein Verschwenken und/oder Verschieben) der Leitung ermöglichen. Das Fördern des Flüssigproduktes kann durch äußere Einflüsse (z.B. unter Einwirkung der Erdanziehungskraft) selbständig oder durch ein aktives System (Pumpe zum Saugen oder Drücken der Flüssigkeit) erfolgen. Ventile können Leckagen vor und nach dem zum sicheren Flüssigkeitsaustausch vorgesehenen Zeitfenster unterbinden. Auch kann zumindest eine mittels Druckkraft herstellbare formschlüssige Verbindung vorgesehen werden, um einen sicheren Austausch des Flüssigproduktes zwischen Flüssigkeitsbehältern/-tanks und/oder Schläuchen/Rohren und/oder anderen Lagersystemen für das Flüssigprodukt zu gewährleisten.

Die Anwendungsmöglichkeiten des hiermit vorgestellten Ausgleichsmechanismus 1 zum Ausgleichen einer positionellen Inkongruenz sind mannigfaltig. Im Einklang mit den oben diskutierten Beispielen wäre hier zuerst die Lieferung eines Fest- oder Flüssigproduktes von einem Lager zu einem privaten Ablageort (z.B. Haus, Wohnung, Garten o.ä.), zu einem zentralen Ablageort (Filiale, Paketstation o.ä.) oder zu einem (insbesondere autonom fahrenden) Fahrzeug, oder, wie oben exemplarisch im Zusammenhang mit Fig. 1 bis 4e erläutert, von einem Flugobjekt zu einem anderen Flugobjekt zu nennen. Darüber hinaus kann der erfindungsgemäße Ausgleichsmechanismus 1 aber in allen für Flugobjekte bekannten Einsatzgebieten vorteilhaft Verwendung finden.

### Bezugszeichenliste

1 Ausgleichsmechanismus
2 Träger-Flugobjekt (Drohne)
3, 4, 5 kinematische Kette
3a, 3b, 3c, 3c1, 3c2, 3d1, 3d2,
3e, 4a, 4b, 4c1, 4c2, 4d1, 4d2,
5a, 5b, 5c1, 5c2, 5d1, 5d2, 5e Glied
6 Endeffektor
7, 8, 9 erstes Gelenk
10, 11, 12 zweites Gelenk
13, 13a, 13b, 13b1, 13b2, 13c1,
13c2, 13d1, 13d2, 14, 14a, 14b,
14b1, 14b2, 14c1, 14c2, 14d1,
14d2, 15, 15a, 15b1, 15b2, 15c1,
15c2, 15d1, 15d2 drittes Gelenk (Zwischengelenk)
16 weiteres Flugobjekt (Drohne)
17 Austauschmechanismus
18, 19 Fixiereinrichtung
20, 21, 22 Trägerplattform

## Patentansprüche

1. Ausgleichsmechanismus (1) zum Ausgleichen einer positionellen Inkongruenz zwischen einem Träger-Flugobjekt (2), insbesondere einer Drohne, im Flugzustand und einem weiteren Flugobjekt oder einer Bodenstation, umfassend:
- mindestens zwei kinematische Ketten (3, 4, 5), wobei jede kinematische Kette aus mindestens einem Glied (3a, 3b, 3c, 3c1, 3c2, 3d1, 3d2, 3e, 4a, 4b, 4c, 4c1, 4c2, 4d1, 4d2, 4e, 5a, 5b, 5c1, 5c2, 5d1, 5d2, 5e) besteht;
- einen Endeffektor (6), mit dem alle kinematischen Ketten (3, 4, 5) mit jeweils einem ersten ihrer Enden verbunden sind;
- erste Gelenke (7, 8, 9), die jeweils an einem zweiten Ende der kinematischen Ketten (3, 4, 5) angeordnet sind, um eine gelenkige Verbindung zwischen der jeweiligen kinematischen Kette (3, 4, 5) und dem Träger-Flugobjekt (2) herzustellen;
- zweite Gelenke (10, 11, 12), die jeweils an dem ersten Ende der kinematischen Ketten (3, 4, 5) angeordnet sind, um eine gelenkige Verbindung zwischen der jeweiligen kinematischen Kette und dem Endeffektor (6) herzustellen; und
- mindestens einen ersten Aktuator, der an einem ersten und/oder zweiten Gelenk (7, 8, 9, 10, 11, 12) vorgesehen ist, um eine translatorische und/oder rotatorische Bewegung der jeweiligen kinematischen Kette (3, 4, 5) am und/oder um das jeweilige erste und/oder zweite Gelenk (7, 8, 9, 10, 11, 12) zu erzeugen.

2. Ausgleichsmechanismus (1) nach Anspruch 1, wobei drei identische kinematische Ketten (3, 4, 5) zur Verbindung zwischen Träger-Flugobjekt (2) und Endeffektor (6) vorgesehen sind, und wobei zwei benachbarte kinematische Ketten (3, 4, 5) jeweils deltaförmig vom Träger-Flugobjekt (2) zum Endeffektor (6) zusammenlaufen.

3. Ausgleichsmechanismus nach Anspruch 1 oder 2, wobei jede kinematische Kette (3, 4, 5) aus mindestens zwei Gliedern (3a, 3b, 3c, 3c1, 3c2, 3d1, 3d2, 4a, 4b, 4c, 4c1, 4c2, 4d1, 4d2, 4e 5a, 5b, 5c1, 5c2, 5d1, 5d2, 5e) zusammengesetzt ist, wobei die Glieder (3a, 3b, 3c, 3c1, 3c2, 3d1, 3d2, 3e, 4a, 4b, 4c, 4c1, 4c2, 4d1, 4d2, 4e, 5a, 5b, 5c1, 5c2, 5d1, 5d2, 5e) einer kinematischen Kette (3, 4, 5) durch mindestens ein drittes Gelenk (13, 13a, 13b, 13b1, 13b2, 13c1, 13c2, 13d1, 13d2, 14, 14a, 14b, 14b1, 14b2, 14c1, 14c2, 14d1, 14d2, 15, 15a, 15b1, 15b2, 15c1, 15c2, 15d1, 15d2) miteinander verbunden sind.

4. Ausgleichsmechanismus nach Anspruch 3, wobei die Glieder (3a, 3b, 3c, 3c1, 3c2, 3d1, 3d2, 4a, 4b, 4c, 4c1, 4c2, 4d1, 4d2, 4e, 5a, 5b, 5c1, 5c2, 5d1, 5d2, 5e) jeweils als Stab oder als Seil ausgebildet sind.

5. Ausgleichsmechanismus (1) nach einem der Ansprüche 1 bis 4, weiter umfassend mindestens einen zweiten Aktuator, der an einem dritten Gelenk (13, 13a, 13b, 13b1, 13b2, 13c1, 13c2, 13d1, 13d2, 14, 14a, 14b, 14b1, 14b2, 14c1, 14c2, 14d1, 14d2, 15, 15a, 15b1, 15b2, 15c1, 15c2, 15d1, 15d2) vorgesehen ist, um eine translatorische und/oder rotatorische Bewegung der jeweiligen kinematischen Kette (3, 4, 5) am und/oder um das jeweilige dritte Gelenk (13, 13a, 13b, 13b1, 13b2, 13c1, 13c2, 13d1, 13d2, 14, 14a, 14b, 14b1, 14b2, 14c1, 14c2, 14d1, 14d2, 15, 15a, 15b1, 15b2, 15c1, 15c2, 15d1, 15d2) zu erzeugen.

6. Ausgleichsmechanismus (1) nach einem der Ansprüche 1 bis 5, wobei es sich bei dem mindestens einen ersten Aktuator und/oder mindestens einen zweiten Aktuator um einen mechanisch, elektrisch und/oder pneumatisch betätigbaren Aktuator handelt.

7. Ausgleichsmechanismus (1) nach einem der Ansprüche 1 bis 6, wobei die ersten Gelenke (7, 8, 9) und/oder die zweiten Gelenke (10, 11, 12) und/oder die dritten Gelenke (13, 13a, 13b, 13b1, 13b2, 13c1, 13c2, 13d1, 13d2, 14, 14a, 14b, 14b1, 14b2, 14c1, 14c2, 14d1, 14d2, 15, 15a, 15b1, 15b2, 15c1, 15c2, 15d1, 15d2) jeweils null bis drei translatorische Freiheitsgrade und/oder null bis drei rotatorische Freiheitsgrade, aber jeweils mindestens einen Freiheitsgrad besitzen.

8. Ausgleichsmechanismus (1) nach einem der Ansprüche 1 bis 7, wobei die Bewegung mindestens eines der ersten Gelenke (7, 8, 9) und/oder der zweiten Gelenke (10, 11, 12) und/oder der dritten Gelenke (13, 13a, 13b, 13b1, 13b2, 13c1, 13c2, 13d1, 13d2, 14, 14a, 14b, 14b1, 14b2, 14c1, 14c2, 14d1, 14d2, 15, 15a, 15b1, 15b2, 15c1, 15c2, 15d1, 15d2) mechanisch blockierbar ist, insbesondere durch Versehen des Gelenkes mit einem Verriegelungsmechanismus und/oder einer Bremse.

9. Ausgleichsmechanismus (1) nach einem der Ansprüche 1 bis 8, wobei mindestens eines der zweiten und/oder dritten Gelenke (13b, 14b) als Teleskop-Gelenk ausgebildet ist und wahlweise mit einem Aktuator zum Aus- oder Einfahren eines Glieds (3c, 4c) der jeweiligen kinematischen Kette (3, 4) versehen ist.

10. Ausgleichsmechanismus (1) nach zumindest einem der Ansprüche 1 bis 9, wobei der Endeffektor (6) aus einer kardanischen Aufhängung besteht.

11. Ausgleichsmechanismus (1) nach zumindest einem der vorhergehenden Ansprüche 1 bis 10, umfassend ein Sensorsystem zur Erfassung der Relativpositionen und/ oder -bewegungen zwischen dem Träger-Flugobjekt (2) und dem weiteren Flugobjekt (13) oder der Bodenstation, wobei das Sensorsystem zumindest einen Sensor umfasst, ausgewählt aus der Gruppe: Lidar-Sensor, Kamera mit Form- und/oder Mustererkennung, insbesondere aktiver LED-Mustererkennung, Lasersensor und Satellitennavigationssensor, insbesondere RTK-GPS-Sensor.

12. Ausgleichsmechanismus (1) nach Anspruch 11, weiter umfassend eine Steuereinheit, die konfiguriert ist, basierend auf den vom Sensorsystem erfassten Relativpositionen und oder -bewegungen den mindestens einen ersten Aktuator und/oder den mindestens einen zweiten Aktuator zur entsprechenden Bewegungskontrolle der kinematischen Ketten (3, 4, 5) des Ausgleichsmechanismus (1) anzusteuern.

13. Ausgleichsmechanismus (1) nach einem der Ansprüche 1 bis 12, weiter umfassend ein Kommunikationssystem mit einer drahtlosen Kommunikationsschnittstelle zur Übertragung von Daten, betreffend Relativpositionen und/oder -bewegungen und/oder betreffend auszutauschende Produkte, via Funk, LTE oder 5G direkt zwischen dem Träger-Flugobjekt (2) und dem weiteren Flugobjekt (13) oder indirekt durch Zwischenschaltung eines boden- oder luftgebundenen Masters.

14. Träger-Flugobjekt (2), insbesondere Drohne, ausgerüstet mit mindestens einem Ausgleichsmechanismus nach zumindest einem der Ansprüche 1 bis 13.

15. Träger-Flugobjekt (2), insbesondere Drohne, nach Anspruch 14, wobei mindestens eines der ersten Gelenke (7, 8, 9) am Träger-Flugobjekt (2) beweglich angebracht ist.

16. Träger-Flugobjekt (2), insbesondere Drohne, nach Anspruch 14 oder 15, wobei die ersten Gelenke (7, 8, 9) symmetrisch oder asymmetrisch am Flugzeug verteilt sind.

17. Träger-Flugobjekt (2) nach einem der Ansprüche 14 bis 16, weiter umfassend mindestens eine Fixiereinrichtung (18, 19), mittels der mindestens eines der dritten Gelenke (13, 13a, 13b, 13b1, 13b2, 13c1, 13c2, 13d1, 13d2, 14, 14a, 14b, 14b1, 14b2, 14c1, 14c2, 14d1, 14d2, 15, 15a, 15b1, 15b2, 15c1, 15c2, 15d1, 15d2) lösbar am Träger-Flugobjekt (2) fixierbar ist.

18. Träger-Flugobjekt (2) nach Anspruch 17, wobei die ersten Gelenke (7, 8, 9) an einer Trägerplattform (20, 21, 22) befestigt sind, und wobei diese Trägerplattform (20, 21, 22) eine integrale Komponente des Rumpfes und/oder des Flügels des Träger-Flugobjektes (2) und/oder eine zusätzlich auf dem Rumpf und/oder dem Flügel des Träger-Flugobjektes (2) aufgebrachte Komponente bildet.

19. Träger-Flugobjekt (2) nach Anspruch 18, wobei die zentrale Achse des Ausgleichsmechanismus (1) durch den Massenmittelpunkt der Trägerplattform (20, 21, 22) verläuft.

20. Träger-Flugobjekt (2) nach Anspruch 18 oder 19, wobei der Ausgleichsmechanismus (1) unter dem Massenmittelpunkt der Trägerplattform (20, 21, 22) im oder am Rumpf des Träger-Flugobjektes (2), oder über dem Massenmittelpunkt der Trägerplattform (20, 21, 22) im oder am Rumpf des Träger-Flugobjektes (2), oder unter oder über dem Massenmittelpunkt der Trägerplattform (20, 21, 22) im oder am Flügel des Träger-Flugobjektes (2) angebracht ist.

21. Träger-Flugobjekt (2) nach einem der Ansprüche 14 bis 20, wobei das Träger-Flugobjekt (2) über zusätzliche bewegliche Massen und/oder zusätzliche primäre Flugsteuerflächen, wie Klappen, verfügt, um durch die Bewegungen des Ausgleichsmechanismus (1) verursachte Gewichtsverschiebungen und/oder dabei entstehende Momente zu kompensieren.

22. Träger-Flugobjekt (2) nach einem der Patentansprüche 14 bis 21, weiter umfassend mindestens einen Austauschmechanismus (17), um ein festes oder flüssiges Produkt zwischen dem Träger-Flugobjekt (2) und dem weiteren Flugobjekt (16) oder der Bodenstation in einem Zustand auszutauschen, bei dem durch den Ausgleichsmechanismus (1) eine für diesen Produktaustausch erforderliche positionelle Kongruenz zwischen dem Träger-Flugobjekt (2) und dem weiteren Flugobjekt (16) oder der Bodenstation eingestellt und gehalten wird.
